# EUROPÄISCHE PATENTSCHRIFT

(11) **EP 3 356 565 B1**
(45) Veröffentlichungstag und Bekanntmachung des Hinweises auf die Patenterteilung: **13.11.2019**
(21) Anmeldenummer: 16769952.9
(22) Anmeldetag: 16.09.2016
(51) Int. Cl.: C21D 7/02, C25D 3/22, C22C 38/04, C22C 38/06, C22C 38/24, C22C 38/26

(54) **STAHLFLACHPRODUKT UND DURCH UMFORMEN EINES SOLCHEN STAHLFLACHPRODUKTS HERGESTELLTES STAHLBAUTEIL**
STEEL-SHEET PRODUCT AND STEEL COMPONENT PRODUCED BY FORMING SUCH A STEEL-SHEET PRODUCT
PRODUIT PLAT EN ACIER ET PIÈCE EN ACIER FABRIQUÉE PAR MISE EN FORME D'UN TEL PRODUIT PLAT EN ACIER

(30) Priorität: 30.09.2015 WO PCT/EP2015/072626
(43) Veröffentlichungstag der Anmeldung: 08.08.2018
(73) Patentinhaber: ThyssenKrupp Steel Europe AG, 47166 Duisburg (DE)
(72) Erfinder: HOFMANN, Harald, 44357 Dortmund (DE); SCHIRMER, Matthias, 40227 Düsseldorf (DE); THOMAS, Ingo, 47119 Duisburg (DE)
(74) Vertreter: ThyssenKrupp Steel Europe AG
(86) Internationale Anmeldenummer: PCT/EP2016/071989
(87) Internationale Veröffentlichungsnummer: WO 2017/055107

(56) Entgegenhaltungen:
- EP-A1- 2 208 803
- EP-A1- 2 402 472
- EP-A2- 2 749 667
- WO-A1-2007/075006
- YADAV ET AL: "Surface potential distribution over a zinc/steel galvanic couple corroding under thin layer of electrolyte", ELECTROCHIMICA ACTA, ELSEVIER SCIENCE PUBLISHERS, BARKING, GB, Bd. 52, Nr. 9, 1. Februar 2007 (2007-02-01), Seiten 3121-3129, XP005869643, ISSN: 0013-4686, DOI: 10.1016/J.ELECTACTA.2006.09.061
- YADAV ET AL: "Effect of Fe-Zn alloy layer on the corrosion resistance of galvanized steel in chloride containing environments", CORROSION SCIENCE, OXFORD, GB, Bd. 49, Nr. 9, 19. Juli 2007 (2007-07-19), Seiten 3716-3731, XP022158030, ISSN: 0010-938X, DOI: 10.1016/J.CORSCI.2007.03.039

## Beschreibung

Die Erfindung betrifft ein aus einem höherfesten Stahl mit hohem ManganGehalt hergestelltes Stahlflachprodukt, das sich für eine Umformung eignet und eine gute Widerstandsfähigkeit gegen eine durch frei werdenden Wasserstoff ausgelöste Rissbildung besitzt. Zum Schutz gegen Korrosion ist das Stahlsubstrat des Stahlflachprodukts mit einer Zn-Beschichtung belegt.

Darüber hinaus betrifft die Erfindung ein Stahlbauteil, das durch Umformen eines derartigen Stahlflachprodukts hergestellt ist.

Wenn hier von Stahlflachprodukten die Rede ist, so sind damit durch Walzprozesse gewonnene Stahlbänder, Stahlbleche und daraus gewonnene Platinen, Zuschnitte und desgleichen bezeichnet.

Sofern hier im Zusammenhang mit einer Legierungsvorschrift Angaben zum Gehalt eines Legierungselements gemacht werden, beziehen sich diese auf das Gewicht, sofern nicht ausdrücklich etwas anderes angegeben ist.

Bei für Karosseriebauteile und vergleichbare Anwendungen bestimmten Stählen und daraus hergestellten Stahlflachprodukten muss sichergestellt sein, dass sie gut schweißbar sind und insbesondere nicht zu einer durch die im Zuge des Schweißens eintretenden Rissbildung im Bereich der jeweiligen Schweißstelle ("Lotrissigkeit") neigen.

Mit "Lotrissigkeit" ist eine Schwächung von Korngrenzen durch ein die Korngrenzen infiltrierendes Medium (z. B. Zink aus Beschichtung, Cu aus Schweißzusatzwerkstoff) bezeichnet, die aufgrund von Abkühlspannungen zu Rissen führen kann. So kann es beispielsweise beim Verschweißen von verzinkten Blechen dazu kommen, dass das als Korrosionsschutzbeschichtung auf das Stahlblechsubstrat aufgetragene Zink in Folge der hohen Schweißtemperaturen aufschmilzt und an Korngrenzen in das Stahlblech eindringt. Bei der anschließenden Abkühlung treten an diesen Korngrenzen Spannungen auf, die interkristalline Risse verursachen können.

Auch dürfen für Karosseriebauteile eingesetzte Stahlflachprodukte nach einer langen Einsatzdauer unter den im praktischen Einsatz auftretenden Lasten nicht zur Bildung von Wasserstoff-induzierten Rissen, der so genannten "verzögerten Rissbildung", neigen, die gefährliche Folgen für die Festigkeit und Stabilität des Bauteils und der mit ihm hergestellten Karosserie haben könnte. In der Praxis ist hier festgestellt worden, dass bei verzinkten Bauteilen trotz des durch die Verzinkung bereitgestellten Korrosionsschutzes nach deutlich kürzeren Zeiträumen erste Risse auftreten, die durch austretenden Wasserstoff ausgelöst sind.

Grundsätzlich ist es bekannt, dass hochmanganhaltige superduktile Stähle der hier in Rede stehenden Art zur zeitverzögert nach der Umformung zum Bauteil einsetzenden Rissbildung neigen. Der Widerstand gegen Wasserstoff-induzierte Rissbildung wird in sogenannten Näpfchentests ermittelt (s. EP 2 402 472 A1). Dabei werden aus kaltgewalzten Stahlflachprodukten Blechronden mit einem definierten Durchmesser, beispielsweise 150 mm, abgeteilt, aus denen mittels eines Stempels mit ebenso definiertem Durchmesser, der typischerweise der Hälfte des Durchmessers der Ronden beträgt (Ronden/Näpfchendurchmesser-Verhältnis = 2,0 ("Ziehverhältnis")), topfartige Näpfchen tiefgezogen. Die beim Näpfchentest erzeugten "Näpfchen" weisen im Bereich ihres freien Randes eine freiliegende Schnittkante auf, an der keine Korrosionsschutzbeschichtung vorhanden ist. Gleichzeitig liegen an dieser Schnittkannte in Folge der dort eingetretenen Verformungen hohe Spannungen vor. Insgesamt ergeben sich dadurch Voraussetzungen für eine besonders große Empfindlichkeit gegen Wasserstoff-induzierte Rissbildung im Bereich der betreffenden Kante, die solche Näpfchen als Prüfobjekt besonders geeignet machen.

Der grundlegende Reaktionsmechanismus an einem verzinkten Näpfchen kann, wie in G. Reumont et al. "The effects of an Fe-Zn intermetallic-containing coating on the stress corrosion cracking behavior of a hot-dip galvanized steel", Elsevier Science B.V., Surface and Coatings Technology 139 (2001), S. 265 - - 271, als Reaktion in zwei Teilschritten betrachtet werden. Das Metall der Zinkschicht geht demnach als Ion in Lösung. Entsprechend der Ladungszahl verbleiben Elektronen im Werkstoff. Gleichzeitig werden die im Korrosionsmedium vorhandenen Wasserstoffionen mit diesen Elektronen zu Wasseratomen an der Werkstoffoberfläche reduziert. Diese Atome liegen dann adsorbiert vor und können in den Werkstoff aufgenommen werden. Der aufgenommene Wasserstoff kann im Stahl zu einem schnellen Versagen durch Rissbildung führen. Insbesondere Stähle mit einer Zugfestigkeit über 1000 MPa sind, wie in H. Mohrbacher "Delayed cracking in ultra-high strength automotive steels: Damage mechanismus and remedies by microstructural changes", NiobelCon bvba, Scheide Belgium, dargelegt, für dieses Phänomen anfällig.

Gemäß der ASTM F 2078 wird zwischen ex- und intrinsischem Wasserstoff unterschieden. So beruht die Wirkung von intrinsischem Wasserstoff (IHE = Internal Hydrogen Embrittlement) auf Wasserstoff, der bereits vor der Gebrauchsphase eingebracht wurde, d. h. der zum Schaden führende Wasserstoff ist bereits herstellungsbedingt im Stahlsubstrat vorhanden.

Bekannt ist dieser Versagensmechanismus von Stählen mit TRIP-Effekt. Austenit, hier bevorzugt Restaustenit, kann etwa eine Größenordnung mehr Wasserstoff lösen als ferritisches Gefüge. Wandelt sich nun beim TRIP-Effekt der Restaustenit in Martensit um, wird Wasserstoff aus dem Martensit heraus gedrängt, was zu hohen lokalen Wasserstoffgehalten und der damit einhergehenden Gefahr einer Rissbildung führen kann, die bei hoher Belastung zum Versagen des jeweiligen Bauteils führen kann.

Die vorliegende Erfindung befasst sich insbesondere mit Maßnahmen zur Abwendung von durch intrinsischen (IHE) und extrinsischen Wasserstoff bedingter Rissbildung (EHE External Hydrogen Embrittlement).

In der Literatur werden verschiedene Theorien zum Versagen durch Wasserstoff diskutiert. Allerdings hat sich bisher keine Theorie endgültig durchgesetzt.

Versuche haben allerdings ergeben, dass durch eine zinkhaltige, durch Schmelztauchbeschichten oder elektrolytische Abscheidung aufgebrachte Beschichtung ("Z" oder "ZE") die wasserstoffinduzierte Rissbildung gefördert wird. So kommt es auch an mit einer Zinkbeschichtung versehenen Stahlblechen zu Korrosionseffekten, Wasserstoffbildung und Wasserstoffaufnahme des Stahlsubstrats, wenn an der zinkhaltigen Beschichtung Beschädigungen vorhanden sind. Zu solchen Beschädigungen kann es im praktischen Gebrauch beispielsweise durch Steinschlag kommen. Ebenso gefährdet sind die Schnittkanten der Bleche, die zwangsläufig entstehen, wenn aus einem Zn-beschichteten Stahlflachprodukt Platinen geschnitten werden, aus denen dann Bauteile geformt werden. Ausgehend von den beschädigten Stellen werden letztendlich Risse initiiert und ihre Ausbreitung begünstigt.

Insbesondere bei für Karosseriebauteile eingesetzten Stählen der in Rede stehenden Art darf es selbst dann nicht zur Bildung von wasserstoffinduzierten Rissen kommen, wenn das jeweilige Stahlflachprodukt, das aus einem solchen Stahl besteht, für die Herstellung des jeweiligen Karosseriebauteils mehrfach umgeformt wird. Auch bei solchen Bauteilen kann die andernfalls unter den im praktischen Einsatz auftretenden Lasten in der Regel erst nach einer langen Einsatzdauer eintretende "verzögerte Rissbildung" gefährliche Folgen für die Festigkeit und Stabilität des jeweiligen Bauteils nach sich ziehen.

Es sind viele Versuche gemacht worden, für den Karosseriebau und vergleichbare Anwendungsgebiete Stähle zur Verfügung zu stellen, die eine gute Verformbarkeit sowie mechanische Eigenschaften besitzen, die im Hinblick auf die beabsichtigte Verwendung optimiert sind, und die gleichzeitig unempfindlich sind gegen eine wasserstoffinduzierte verzögerte Rissbildung.

Aus der EP 2 090 668 A1 ist eine Legierungsvorschrift für einen Stahl bekannt, der TWIP-Eigenschaften besitzen soll und dazu neben Eisen und unvermeidbaren Verunreinigungen (in Gew.-%) 0,05 - 0,78 % C und 11 - 23 % Mn aufweist sowie zusätzlich jeweils bis zu 5 % Al und Cr, bis zu 2,5 % Ni, bis zu 5 % Si und bis zu 0,5 % V enthalten kann. Bevorzugt soll die Summe der Ni- und Mn-Gehalte im Bereich von 11,0 - 23 Gew.-%, insbesondere 11 - 15,9 Gew.-%, liegen, ohne dass dazu eine Begründung angegeben ist. Dabei wird das Problem der Vermeidung von verzögerter Rissbildung durch die Existenz von Wasserstoff im Stahlsubstrat nicht angesprochen. Dementsprechend enthält auch keines der in der EP 2 090 668 A1 angegebenen Ausführungsbeispiele wirksame Gehalte an Ni.

Ein Beispiel für einen Leichtstahl, der bei hoher Zähigkeit, hoher Festigkeit und verminderter Rissanfälligkeit eine optimale Verformbarkeit besitzen soll, ist in der WO 2007/075006 A1 beschrieben. Der dort vorgestellte Stahl enthält neben Fe und unvermeidbaren Verunreinigungen (in Gew.-%) 0,2 - 1,5 % C, 10- 25 % Mn, 0,01 - 3,0 % Al, 0,005 - 2,0 % Si, bis zu 0,03 % P, bis zu 0,03 % S und bis zu 0,040 % N sowie jeweils optional 0,1 - 2,0 % Cr, 0,0005 - 0,01 % Ca, 0,01 - 0,1 % Ti, 0,001 - 0,020 % B. Der derart legierte Stahl soll sich besonders gut mit einem vor Korrosion schützenden Überzug beschichten lassen.

Aus der EP 2 402 472 A1 ist des Weiteren ein höherfester, kaltumformbarer Stahl und ein aus einem solchen Stahl hergestelltes Stahlflachprodukt bekannt, bei denen eine optimale Kombination aus Schweißbarkeit und geringer Neigung zur verzögerten Bildung von Rissen bei guter Festigkeit, Warm- und Kaltverformbarkeit gesichert ist. Um dies zu erreichen, enthält dieser bekannte Stahl (in Gew.-%) C: 0,1 - 1,0 %, Mn: 10 - 25 %, Si: bis zu 0,5 %, Al: 0,3 - 2 %, Cr: 1,5 - 3,5 %, S: < 0,03 %, P: < 0,08 %, N: < 0,1 %, Mo: < 2 %, B: < 0,01 %, Ni: < 8 %, Cu: < 5 %, Ca: bis zu 0,015 %, mindestens ein Element aus der Gruppe "V, Nb" nach folgender Maßgabe: Nb: 0,01 - 0,5 %, V: 0,01 - 0,5 % sowie optional Ti: 0,01 - 0,5 % und als Rest Eisen und unvermeidbare, herstellungsbedingte Verunreinigungen. Ni kann in diesem Stahl optional vorhanden sein, um die Bruchdehnung und die Zähigkeit des Stahls zu steigern.

Vor dem Hintergrund des voranstehend zusammengefassten Standes der Technik bestand die Aufgabe der Erfindung darin, einen Stahl und daraus hergestellte Stahlflachprodukte anzugeben, bei denen eine optimale Kombination aus Schweißbarkeit und geringer Neigung zur verzögerten Bildung von Rissen bei guter Festigkeit, Warm- und Kaltverformbarkeit gesichert ist.

In Bezug auf das Stahlflachprodukt hat die Erfindung diese Aufgabe durch das in Anspruch 1 angegebene Stahlflachprodukt gelöst.

Die Lösung der oben genannten Aufgabe in Bezug auf das Stahlbauteil besteht darin, dass ein solches Bauteil durch Umformen eines erfindungsgemäßen Stahlflachprodukts hergestellt ist.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes, für eine Kaltverformung vorgesehenes Stahlflachprodukt ist demnach zum einen mit einer metallischen Zn-Beschichtung beschichtet, deren Basis Zink ist und die neben den durch Herstellungsprozess in die Zn-Beschichtung gelangenden Bestandteilen zusätzlich jeweils 5 - 20 Gew.-% Ni oder Mo enthält. Dabei können Mo und Ni nicht nur alleine, sondern auch in Kombination miteinander in der erfindungsgemäßen Beschichtung vorhanden sein.

Das Stahlsubstrat des erfindungsgemäßen Stahlflachprodukts besteht zum anderen aus einem Stahl, der als Pflichtbestandteile (in Gew.-%)

| | |
|---|---|
| C: | 0,1 - 1,0 %, |
| Mn: | 10 - 30 %, |
| Al: | 0,4 - 2,5 %, |

und als Rest Eisen und unvermeidbare Verunreinigungen enthält und der als Wahlbestandteil zusätzlich eines oder mehrere der nachfolgend genannten Elemente mit der Maßgabe
Ni: 0,1 - 2 %,
Mo: 0,1 - 2 %,
Si: bis zu 3 % ,
Cr, Cu: jeweils bis zu 5 %,
P: bis zu 0,1 %,
S: bis zu 0,03 %,
Ti, Nb, V, Zr, Co: jeweils bis zu 0,5 %,
W: in Summe bis zu 0,5 %,
Sn, Sb, As: ins Summe bis zu 0,5 %
Ca: bis zu 0,015 %,
B: bis zu 0,1 %,
SEM: bis zu 1 %,
N: bis zu 0,1 %,
enthalten kann.

Dabei sind die Zusammensetzungen der Zn-Beschichtung und des Stahlsubstrats eines erfindungsgemäßen Stahlflachprodukts so aufeinander abgestimmt, dass der Betrag der mittleren Potenzialdifferenz zwischen der Zn-Beschichtung und dem Stahlsubstrat maximal 0,44 V beträgt.

Die Erfindung geht von der Erkenntnis aus, dass der elektrochemischen Potentialdifferenz zwischen den Elementen des Stahlsubstrats und der Zn-Beschichtung eines erfindungsgemäßen Stahlflachprodukts eine besondere Bedeutung bei der Verringerung der Wasserstoff-induzierten Versprödung zukommt. So tritt bei Näpfchen, die aus einem erfindungsgemäßen Stahlflachprodukt in dem oben schon erläuterten Näpfchentest geformt worden sind und einer korrosiven Umgebungsatmosphäre unterhalb der erfindungsgemäß als Maximalwert vorgesehenen mittleren Potentialdifferenz von betragsmäßig 0,44 V kein Näpfchenversagen mehr auf.

Bei nach dieser Maßgabe abgestimmten Zusammensetzungen von Stahlsubstrat und Zn-Beschichtung ist folglich die Triebkraft zur Wasserstoffaufnahme im Stahlsubstrat so deutlich verringert, dass in den mit der Umgebungsatmosphäre in Kontakt kommenden, nicht mit Zn-beschichteten Stellen des aus dem Stahlflachprodukt jeweils geformten Bauteils weniger H bereitgestellt und in das Stahlsubstrat des Stahlflachprodukts aufgenommen wird. Dieser Effekt ist nach den Erkenntnissen der Erfindung oberhalb von betragsmäßig 0,44 V liegenden mittleren Potenzialdifferenzen nicht mit der für den praktischen Einsatz erforderlichen Sicherheit gewährleistet.

Unterhalb einer mittleren Potenzialdifferenz von betragsmäßig 0,44 V ist dagegen eine deutliche Verbesserung des Widerstands gegen wasserstoffinduzierte Rissbildung zu beobachten, die sich mit abfallender Potenzialdifferenz verstärkt. So ist unterhalb einer Potenzialdifferenz von betragsmäßig 0,42 V eine Schutzwirkung betriebssicher gewährleistet. Bei Potenzialdifferenzwerten, die betragsmäßig kleiner als 0,2 V sind, ist eine starke Abnahme der Schutzwirkung der Zn-Beschichtung zu beobachten. Der optimale Bereich der Schutzwirkung der Zinkschicht mit einem optimiert hohen Widerstand gegen Wasserstoff-induzierte Rissbildung, insbesondere gegen IHE, wird daher erreicht, wenn die Potenzialdifferenz betragsmäßig 0,2 - 0,4 V ist.

Die kathodische Schutzwirkung wird durch das elektrochemische Potenzial beschrieben, wobei geringe Differenzen eine hohe Schutzwirkung insbesondere auch gegen H2-Rißbildung bedeuten.

Sie kann an der jeweiligen Zn-Beschichtung in an sich bekannter Weise mittels Kurzschlussstrom-Messungen bestimmt werden. Hierzu werden zwei Proben, und zwar eine mit der Zn-Beschichtung versehene und eine unbeschichtete Probe, miteinander gekoppelt. In diesem galvanischen Element opfert sich die "unedle" Seite, d. h. die Zink-Beschichtung, um die "edlere", das Substrat, vor Korrosion zu schützen. Über einen Potentiostat werden die gekoppelten Proben auf 0 V polarisiert und der resultierende Strom gemessen. Aus der Höhe des geflossenen Stromes und der Dauer kann die Ladung ermittelt werden. Gleichzeitig kann die Potenzialdifferenz zwischen beiden Proben erfasst werden. Die Potenzialdifferenz zwischen der beschichteten und der unbeschichteten Probe ist ein Maß für die Potenzialdifferenz zwischen der Zn-Beschichtung und dem Stahlsubstrat und wird im Weiteren mit dieser gleichgesetzt.

Ni oder Mo sind im Stahlsubstrat und in der Zn-Beschichtung eines erfindungsgemäßen Stahlflachprodukts jeweils wahlweise vorhanden. Über die Zugabe von Nickel oder Molybdän zu der Legierung des Stahlsubstrats oder der Zn-Beschichtung kann die mittlere Potentialdifferenz zwischen dem Stahlsubstrat und der Zn-Beschichtung wirksam beeinflusst werden. Dabei können Mo und Ni erforderlichenfalls einzeln oder gemeinsam im Stahlsubstrat vorhanden sein.

Tests mit Näpfchen, die aus erfindungsgemäßen Stahlflachprodukten geformt waren, haben ergeben, dass sich durch Zugabe von Ni oder Mo in die Legierung des Stahlsubstrats oder der Zn-Beschichtung die Beständigkeit gegen eine Wasserstoff-induzierte Rissbildung gegenüber Proben, die kein Ni oder Mo enthielten, deutlich erhöhen ließ, wenn nur in der Zn-Beschichtung Ni oder Mo vorhanden ist, so dass in Anwendungsfällen, in denen die Beständigkeit gegen Wasserstoff-induzierte Rissbildung im Vordergrund steht, diese Variante der Erfindung gewählt werden kann. Durch gleichzeitige Anwesenheit von Ni oder Mo im Stahlsubstrat kann ein optimaler Kompromiss zwischen gutem Korrosionsschutz und möglichst langer Beständigkeit gegen Wasserstoff-induzierte Rissbildung gefunden werden. Besonders vorteilhaft kann es daher sein, wenn Ni und/oder Mo in Gehalten von jeweils 0,1 - 2 Gew.-% im Stahlsubstrat oder in Gehalten von jeweils 5 - 20 Gew.-% in der Zn-Beschichtung des erfindungsgemäßen Stahlflachprodukts jeweils als Pflichtbestandteil vorhanden ist, wobei die kombinierte Anwesenheit von Ni und Mo in den genannten Gehalten sowohl im Stahlsubstrat als auch in der Zn-Beschichtung zu einer optimierten Kombination aus hoher Beständigkeit des Stahlflachprodukts gegen Wasserstoff-induzierte Rissbildung und hohem Korrosionsschutz führt.

Ni in Gehalten von 0,1 - 2 Gew.-% verbessert im Stahlsubstrat eines erfindungsgemäßen Stahlflachprodukts somit den Korrosionswiderstand und erhöht den Widerstand gegen wasserstoffinduzierte verzögerte Rissbildung. Durch die Anwesenheit von Ni im Stahlsubstrat kann die Neigung zu wasserstoffinduzierter verzögerter Rissbildung auch dann wirksam unterdrückt werden kann, wenn aus dem erfindungsgemäßen Stahl erzeugte Stahlflachprodukte und daraus geformte Stahlbauteile einer hochkorrosiven Umgebung ausgesetzt werden. Durch die Anwesenheit von Ni im Stahlsubstrat eines erfindungsgemäßen Stahlflachprodukts wird zudem die Stapelfehlerenergie der Legierung erhöht, was ebenfalls zur Einstellung der TRIP- oder TWIP-Eigenschaften des Stahlsubstrats genutzt werden kann. Gleichzeitig erhöht Ni die Streckgrenze, Zugfestigkeit und Bruchdehnung und hat keine negative Wirkung auf das Schweißen. Eine optimale Wirkung bei gleichzeitig optimierter Wirtschaftlichkeit lässt sich dadurch erzielen, dass der Ni-Gehalt des Stahlsubstrats auf 0,2 - 0,5 Gew.-% eingestellt wird.

Für die Einstellung der erfindungsgemäß vorgesehenen mittleren Potenzialdifferenz zwischen Stahlsubstrat und Zn-Beschichtung kann auch der Zn-Beschichtung Ni gezielt zugegeben werden. Die dazu geeigneten Gehalte liegen im Bereich von 5 - 20 Gew.-%, insbesondere 7 - 14 Gew.-%, typischerweise 9 - 11 Gew.-%. Nickelhaltige Zn-Beschichtungen dieser Art werden in der Fachsprache auch als "ZN-Beschichtung" bezeichnet.

Mo in Gehalten von 5 - 20 Gew.-% wirkt im erfindungsgemäßen Zn-Überzug vergleichbar wie Ni. So wird durch die Anwesenheit von Mo in der Zn-Beschichtung der Korrosionswiderstand erhöht und der Widerstand gegen wasserstoffinduzierte Rissbildung verbessert.

Als besonders günstig im Hinblick auf die hier betrachtete Schutzwirkung erweist es sich dabei, wenn im Stahlsubstrat des erfindungsgemäßen Stahlflachprodukts 0,1 - 2 Gew.-% Mo in Kombination mit Al vorhanden sind. Mo erhöht auch die Streckgrenze, Zugfestigkeit und Warmfestigkeit des Stahlflachprodukts. Oberhalb von 2 Gew.-% ist keine Steigerung der positiven Wirkung von Mo zu beobachten.

Aluminium in Gehalten von 0,3 - 2,5 Gew.-% verbessert im erfindungsgemäßen Stahl den Korrosionswiderstand und erhöht den Widerstand gegen wasserstoffinduzierte verzögerte Rissbildung. Durch die kombinierte Anwesenheit von Ni und/oder Mo und Al lässt sich ein besonders hoher Widerstand gegen wasserstoffinduzierte verzögerte Rissbildung erzielen. Al erhöht zudem ebenfalls die Stapelfehlerenergie der Legierung. Eine Erhöhung der Stapelfehlerenergie ermöglicht die Ausprägung der TRIP- oder TWIP-Eigenschaften. Bei zu hohen Al-Gehalten wird jedoch die Schweißeignung eingeschränkt. Zudem können hohe Al-Gehalte die Neigung zur Lotrissigkeit fördern. Ein optimaler Beitrag von Al zu den Eigenschaften eines erfindungsgemäßen Stahls wird erreicht, wenn sein Al-Gehalt mindestens 0,4 Gew.-%, insbesondere mindestens 0,7 Gew.-% beträgt, wobei jeder negative Einfluss vermieden werden kann, indem der Al-Gehalt auf max. 2 Gew.-% beschränkt wird. Hohe Gehalte von 10 - 30 Gew.-% Mn führen zu einem austenitischen Gefüge. Mn erhöht dabei die Stapelfehlerenergie der Legierung, so dass sich auch über den Mn-Gehalt die TRIP- oder TWIP-Eigenschaften des erfindungsgemäßen Stahls einstellen lassen. Gleichzeitig erhöht Mn die Korrosionsneigung. Daher werden grundsätzlich eher niedrige Mn-Gehalte angestrebt, um den TWIP-Effekt bei geringer Korrosionsneigung nutzen zu können. Der Mn-Gehalt des erfindungsgemäßen Stahls wird deshalb optimalerweise auf 15 - 25 Gew.-% eingestellt.

C-Gehalte von 0,1 - 1,0 Gew.-% stabilisieren den im Gefüge des erfindungsgemäßen Stahls vorhandenen Austenit und können zur Einstellung der TRIP- oder TWIP-Eigenschaften durch Erhöhung der Stapelfehlerenergie genutzt werden. Gleichzeitig trägt C in den erfindungsgemäß vorgegebenen Gehalten zur Erhöhung der Festigkeit bei, ohne die Verformbarkeit zu vermindern. Bei höheren C-Gehalten steigt zwar weiterhin die Festigkeit. Jedoch nimmt die Verformbarkeit und Schweißeignung ab. Bei Gehalten über 1 Gew.-% steigt die Kerbempfindlichkeit stark an. Optimale C-Gehalte liegen daher bei 0,1 - 1 Gew.-%, insbesondere 0,2 - 0,8 Gew.-%.

Si kann im erfindungsgemäßen Stahl in Gehalten von bis zu 3 Gew.-%, insbesondere bis zu 2 Gew.-%, vorhanden sein, um den Widerstand gegen Korrosion und damit einhergehend den Widerstand gegen wasserstoffinduzierte verzögerte Rissbildung zu verbessern. Si erhöht ebenfalls die Streckgrenze bei leichtem Abfall der Verformbarkeit. Si schränkt allerdings die Schweißeignung ein und fördert die Neigung zu Lotrissen. Daher liegen die Si-Gehalte eines erfindungsgemäßen Stahls optimalerweise im Bereich von bis zu 2 Gew.-%.

Cr in Gehalten von bis zu 5 Gew.-%, insbesondere bis zu 3 Gew.-%, verbessert den Korrosionswiderstand, weil auch durch Cr eine dünne passivierende Schicht an der Oberfläche des aus dem erfindungsgemäßen Stahl hergestellten Stahlsubstrats gebildet wird. Allerdings ist diese Wirkung nicht so stark wie bei Al und Si. Bei hohen Gehalten an C und Cr besteht die Gefahr, dass Chromkarbide bei einer Schlussglühung entstehen, die ein erfindungsgemäßes Stahlflachprodukt zur Einstellung seiner Eigenschaften abschließend durchläuft.

Diese können sich sehr nachteilig auf das Korrosionsverhalten und die mechanischen Eigenschaften eines aus erfindungsgemäßem Stahl erzeugten Stahlflachprodukts auswirken. Daher ist der Cr-Gehalt des erfindungsgemäßen Stahlflachprodukts optimalerweise auf höchstens 3 Gew.-%, insbesondere weniger als 3 Gew.-% beschränkt.

P sollte im Stahlsubstrat eines erfindungsgemäßen Stahlflachprodukts in so geringen Gehalten wie möglich im erfindungsgemäßen Stahl vorhanden sein, um schädliche Einflüsse zu vermeiden. Daher ist der P-Gehalt auf bis zu 0,1 Gew.-%, insbesondere auf bis zu 0,05 Gew.-% beschränkt.

Auch S ist im Stahl eines erfindungsgemäßen Stahlflachprodukts grundsätzlich unerwünscht. Es mindert die Warmumformbarkeit beim Warmwalzen und kann die Korrosionsbeständigkeit verschlechtern. Der S-Gehalt des erfindungsgemäßen Stahls ist daher auf 0,03 Gew.-%, bevorzugt 0,01 Gew.-%, beschränkt.

Die der Gruppe "Ti, Nb, V, Zr" zugeordneten Elemente können im Stahlsubstrat eines erfindungsgemäßen Stahlflachprodukts in Gehalten von jeweils bis zu 0,5 Gew.-%, insbesondere jeweils bis zu 0,3 Gew.-%, vorhanden sein. Sie erlauben das Erzeugen eines feinen Gefüges mit einer hohen Dichte an Ausscheidungen. Streckgrenze und Zugfestigkeit des erfindungsgemäßen Stahlflachprodukts lassen sich hierdurch anheben.

Wolfram kann im Stahlsubstrat eines erfindungsgemäßen Stahlflachprodukts in Gehalten von bis 0,5 Gew.-% vorhanden sein. W trägt dabei ebenfalls zur Erzeugung eines feinen Gefüges mit einer hohen Dichte an Ausscheidungen bei. Durch seine Anwesenheit lässt sich die Streckgrenze und Zugfestigkeit des Stahlsubstrats anheben. Gleichzeitig wird durch die Anwesenheit von W die Warmfestigkeit erhöht.

Co kann dem Stahlsubstrat eines erfindungsgemäßen Stahlflachprodukts in Gehalten von bis zu 2 Gew.-% zugegeben werden, um die Rekristallisationstemperatur und Warmfestigkeit des erfindungsgemäßen Stahls zu erhöhen.

B in Gehalten von bis zu 0,1 Gew.-% trägt zur Ausbildung eines feinen Gefüges bei, reduziert aber gleichzeitig die Kaltumformbarkeit und die Oxidationsbeständigkeit. Daher ist der B-Gehalt bevorzugt auf 0,01 Gew.-% beschränkt.

Seltene Erden ("SEM") können im erfindungsgemäßen Stahl in Gehalten von bis zu 1 Gew.-% vorhanden sein, um die Oxidationsbeständigkeit zu verbessern. Eine optimale Balance zwischen Kosten und Nutzen ergibt sich, wenn der SEM-Gehalt des erfindungsgemäßen Stahls 0,5 Gew.-% beträgt.

Cu in Gehalten von bis zu 5 Gew.-%, insbesondere bis zu 3 Gew.-%, verbessert die Korrosionsbeständigkeit, verschlechtert jedoch die Warmformbarkeit und die Oxidationsbeständigkeit bei hohen Gehalten. Zudem können hohe Gehalte an Cu die Neigung zur Lotrissigkeit erhöhen. Daher ist der Cu-Gehalt bevorzugt auf 2 Gew.-% beschränkt.

Ca kann im erfindungsgemäßen Stahl in Gehalten von bis zu 0,015 Gew.-%, insbesondere 0,005 Gew.-%, vorhanden sein, um Schwefel zu binden und so eine gute Korrosionsbeständigkeit zu sichern.

N in Gehalten von bis zu 0,1 Gew.-%, insbesondere 0,02 Gew.- %, hat im erfindungsgemäßen Stahl eine ähnliche Wirkung wie C, nämlich eine Stabilisierung des Austenits sowie eine Erhöhung der Stapelfehlerenergie, Streckgrenze und Zugfestigkeit. Bei Al-haltigen Legierungen sind möglichst geringe N-Gehalte anzustreben, um die Bildung nachteiliger Al-Nitride zu vermindern, die die mechanischen Eigenschaften und die Verformbarkeit verschlechtern würden.

Die Sn-, Sb- und As-Gehalte des Stahlsubstrats eines erfindungsgemäßen Stahlflachprodukts sollten so gering wie möglich sein, jedenfalls in Summe höchstens 0,5 Gew.-% betragen, da höhere Gehalte an diesen Elementen die Duktilität des Stahlsubstrats herabsetzen würden.

Zum Schutz gegen Korrosion ist ein erfindungsgemäßes Stahlflachprodukt in an sich bekannter Weise mit einer Zn-Schicht beschichtet. Diese Beschichtung kann, wie voranstehend erläutert, alleine aus Zink bestehen oder als Zinklegierungsschicht aufgebracht werden. Neben den bereits erläuterten positiven Einflüssen der Zugabe von Ni oder Mo kann die Zn-Beschichtung zusätzliche Bestandteile enthalten. Hierbei handelt es sich insbesondere um solche Elemente, die im Zuge des Herstellungsprozesses, beispielsweise durch Diffusion von im Stahlsubstrat vorhandenen Legierungsbestandteilen, in die Beschichtung gelangen. Hierbei handelt es sich insbesondere um Aluminium, das sich im Überzug insbesondere in Kombination mit Ni und/oder Mo positiv auf die Widerstandsfähigkeit gegen wasserstoffinduzierte Rissbildung auswirkt. Dieser Effekt tritt insbesondere dann ein, wenn in der Zn-Beschichtung des erfindungsgemäßen Stahlflachprodukts Al mit einem Gew.-%-Anteil von mehr als 0,3 vorhanden ist. Zu den anderen in die Zn-Beschichtung herstellungsbedingt gelangenden Bestandteilen gehört insbesondere Fe, dessen Gehalt in der Zn-Beschichtung regelmäßig weniger als 0,3 Gew.-% beträgt. Der Anteil der anderen im Sinne von unwirksamen, technisch bedingten Verunreinigungen in der Zn-Schicht möglicherweise vorhandenen Elemente, wie Be, B, Si, P, S, Ti, V, W, Mo, Cr, Mn, Sb, Cd, Nb, Cu, Sr beträgt in Summe weniger als 0,2 Gew.-%.

Die Zn-Beschichtung kann in an sich bekannter Weise durch Schmelztauchbeschichten (Feuerverzinken) oder elektrolytisch aufgebracht werden, wobei sich die elektrolytische Abscheidung wegen der Genauigkeit, mit der sich die Zusammensetzung der Zn-Beschichtung dort steuern lässt, insbesondere dann als zweckmäßig erwiesen hat, wenn die Zn-Beschichtung im Rahmen der erfindungsgemäßen Vorgaben Ni oder Mo enthält. Hierbei haben sich Schichtdicken der Beschichtung von 3 - 20 µm, insbesondere 5 - 9 µm, typischerweise 6 - 8 µm, in der Praxis besonders bewährt.

Nachfolgend wird die Erfindung anhand von Ausführungsbeispielen näher erläutert.

Es sind sechs kaltgewalzte Stahlflachprodukte E1 - E6, deren Stahlsubstrate gemäß den Vorgaben der Erfindung legiert waren, und zum Vergleich zwei Stahlflachprodukte V3 und V5 bereitgestellt worden, die jeweils eine außerhalb der erfindungsgemäßen Vorgaben liegende Zusammensetzung aufwiesen. Die Zusammensetzung der Stahlsubstrate der Stahlflachprodukte E1 - E6 sowie V3 und V5 sind in Tabelle 1 angegeben.

Jedes der Stahlflachprodukte E1 - E6 sowie V3 und V5 war mit einer durch elektrolytische Abscheidung aufgebrachten Zn-Beschichtung versehen.

Aus den Stahlflachprodukten E1 - E6 sowie V3 und V5 sind durch Tiefziehen nach Maßgabe der in Tabelle 2 angegebenen Parameter Näpfchen geformt worden.

Die erhaltenen Näpfchen sind anschließend in eine wässrige Lösung mit 5 Vol.-% NaCl, Rest Wasser, gesetzt worden. Dabei sind die Näpfchen ständiger Luftzufuhr ausgesetzt worden, um eine gleichmäßige Sauerstoffzufuhr zu gewährleisten. Die Näpfchen wurden in der wässrigen Lösung belassen, bis sich eine erste Rissbildung zeigt.

Ebenso ist für jedes der Stahlflachprodukte E1 - E6 sowie V3 und V5 die mittlere Potenzialdifferenz der jeweiligen Zn-Beschichtung in Bezug auf das jeweilige Stahlsubstrat ermittelt worden. Dazu wurden jeweils drei Paare bestehend aus jeweils einer unbeschichteten und einer beschichteten Probe desselben Stahlsubstrats in jeweils eine elektrolytische Messzelle eingebaut.

Die Oberflächen der beschichteten und der unbeschichteten Proben hatten eine Rauheit Ra zwischen 1,2 und 1,8 µm. Die Messung wurde bei Raumtemperatur mit einem Elektrolyten aus 0,5% NaCl-Lösung durchgeführt. Die Messfläche betrug jeweils 19,6 cm², der Probenabstand betrug jeweils 16,5 cm. Die Oberfläche der unbeschichteten Probe wurde als Kathode und die Oberfläche der beschichteten Probe als Anode angeschlossen. An jedem Paar wurde eine Kurzschlussstrom-Messung durchgeführt. Die Messung erfolgte über einen Zeitraum von jeweils 75 Stunden, wobei die Messwerte der ersten Stunde nicht berücksichtigt wurden, da es zu Beginn der Aufzeichnungen zu Schwankungen kommen kann. Jede Messung ergab jeweils eine dem Messpaar zugehörige Potentialdifferenz. Die für das jeweilige Messpaar relevanten drei einzelnen Potentialdifferenzen wurden arithmetisch gemittelt und ergeben den als mittlere Potenzialdifferenz mP bezeichneten Messwert.

In Tabelle 3 sind für die Proben E1 - E6 sowie V3 und V5 die jeweils in Querrichtung zur Walzrichtung beim Kaltwalzen ermittelten mechanischen Eigenschaften "Dehngrenze Rp0,2", "Zugfestigkeit Rm", "Dehnung A50" sowie die Art des Gefüges, die nach ASTM bestimmte mittlere Korngröße des Gefüges, die Art der Zn-Beschichtung (ZE = elektrolytisch aufgetragene Zn-Beschichtung, die nur aus Zink und unvermeidbaren Verunreinigungen besteht, ohne Ni-Gehalt; ZN = elektrolytisch aufgetragene Zn-Beschichtung, die Ni enthält und als Rest aus Zink und unvermeidbaren Verunreinigungen besteht, ZMO = elektrolytisch aufgetragene Zn-Beschichtung, die Mo enthält und als Rest aus Zink und unvermeidbaren Verunreinigungen besteht), der Ni- oder Mo-Gehalt der jeweiligen Zn-Beschichtung, die Haltezeit tH, bis zu der es zur ersten Rissbildung kam, und der Betrag der jeweiligen mittleren Potenzialdifferenz mP angegeben.

Die Proben E1-E3 sind nicht erfindungsgemäß.

Es zeigte sich, dass die aus den erfindungsgemäßen Stahlflachprodukten bestehenden Näpfchen stets überlegene Haltezeiten tH bis zur ersten Rissbildung erreichten, während sich bei den aus dem jeweils korrespondierenden Vergleichsstahl bestehenden Näpfchen jeweils schon nach vergleichbar kurzer Einsatzzeit Risse ergaben.

Insbesondere zeigen die Versuche in einer bezogen auf die Erfindung allgemein gültigen Weise, dass eine erfindungsgemäße Erhöhung der Näpfchenhaltezeit sowohl durch gezieltes Hinzulegieren von Ni oder Mo in das Substrat als auch durch gezieltes Hinzulegieren von Ni oder Mo in eine Zn-Beschichtung in gleicher Weise eintritt. Dabei erweist sich, dass mit einer Nioder Mo-legierten elektrolytisch aufgetragenen Zn-Beschichtung dann eine den Schutz gegen Wasserstoffversprödung besonders effektiv verbessernde Kombinationswirkung eintritt, wenn im Stahlsubstrat in Kombination mit Ni oder Mo mindestens 0,3 Gew.-% Al, insbesondere deutlich mehr als 0,7 Gew.-% Al, insbesondere mehr als 1 Gew.-% Al, vorhanden sind. Es ist ferner anzumerken, dass Ni oder Mo im Substrat bevorzugt enthalten ist, jedoch der erfinderische Effekt auch bei einer nicht Ni oder Mo enthaltenden Zn-Schicht bereits eintritt, wenn die Potenzialdifferenz zwischen der jeweiligen Zinkbeschichtung und dem Stahlsubstrat ausreichend hoch ist. Im Ergebnis ermöglicht die Erfindung eine Optimierung bzw. Verbesserung eines hier betroffenen Werkstoffs sowohl gegenüber Korrosion als auch (gleichzeitig) gegenüber WasserstoffVersprödung.

**Tabelle 1**

| **Probe** | **C** | **Mn** | **Al** | **Ni** | **Mo** | **Si** | **Cr** | **P** | **S** | **N** | **V** | **Nb** | **Ti** | **B** | **Cu** | **Ca** | **SEM** |
|---|---|---|---|---|---|---|---|---|---|---|---|---|---|---|---|---|---|
| E1 | 0,41 | 19,0 | 1,53 | 0,40 | 0,03 | 0,22 | 0,04 | 0,019 | 0,007 | 0,006 | 0,009 | 0,002 | 0,009 | <0,001 | <0,01 | <0,001 | <0,002 |
| E2 | 0,39 | 19,2 | 1,02 | 0,40 | 0,04 | 0,29 | 0,03 | 0,02 | 0,006 | 0,007 | 0,01 | 0,002 | 0,008 | <0,001 | <0,01 | <0,001 | <0,002 |
| E3 | 0,4 | 18,8 | 1,05 | 0,03 | 0,38 | 0,28 | 0,05 | 0,02 | 0,006 | 0,008 | 0,02 | 0,003 | 0,008 | <0,001 | <0,01 | <0,001 | <0,002 |
| E4 | 0,39 | 18,8 | 1,48 | 0,03 | 0,03 | 0,24 | 0,05 | 0,018 | 0,007 | 0,007 | 0,008 | 0,002 | 0,008 | <0,001 | <0,01 | <0,001 | <0,002 |
| E5 | 0,4 | 19,3 | 1,04 | 0,04 | 0,04 | 0,33 | 0,03 | 0,019 | 0,006 | 0,007 | 0,009 | 0,002 | 0,008 | <0,001 | <0,01 | <0,001 | <0,002 |
| E6 | 0,40 | 19,0 | 1,42 | - | - | 0,29 | 0,11 | 0,021 | 0,008 | 0,007 | 0,010 | 0,003 | 0,008 | <0,001 | <0,01 | <0,001 | <0,002 |
| V3 | 0,62 | 23,2 | <0,01 | 0,02 | 0,03 | 0,19 | 0,02 | 0,019 | 0,006 | 0,009 | 0,008 | 0,002 | 0,008 | <0,001 | <0,01 | <0,001 | <0,002 |
| V5 | 0,6 | 22,9 | <0,01 | 0,31 | 0,04 | 0,21 | 0,02 | 0,02 | 0,006 | 0,009 | 0,008 | 0,002 | 0,006 | <0,001 | <0,01 | <0,001 | <0,002 |

| | | | | | | | | | | | | | | | | | |
|---|---|---|---|---|---|---|---|---|---|---|---|---|---|---|---|---|---|
| Alle Angaben in Gew.-%, Rest Eisen und unvermeidbare Verunreinigungen | | | | | | | | | | | | | | | | | |

**Tabelle 2**

| **Einflussparameter** | **Wert** |
|---|---|
| Ziehverhältnis β (D_{A} Ronde / D, Näpfchen) | β=2,0 |
| Ziehgeschwindigkeit | 2,5 mm/min |
| Matrizenbeschichtung | ja |
| Matrizenradius | 12 mm |
| Stempelradius | 4,4 mm |
| Wandstärke vor Ziehen | 1,1 mm |
| Ziehhilfsmittel | Ziehöl Castrol Illoform PN226 |

**Tabelle 3**

| **Probe** | **Rp0,2 [MPa]** | **Rm [MPa]** | **A50 [%]** | **Korngröße** | **Gefügeart** | **Zn- Beschichtung** | **Ni- oder Mo-Gehalt der Zn-Beschichtung [Gew.-%]** | **tH [Tage]** | **mP [V]** |
|---|---|---|---|---|---|---|---|---|---|
| V3 | 591 | 1045 | 46 | 13 | Austenit | ZE | - | 3 | 0,52 |
| V5 | 604 | 1098 | 48 | 13 | Austenit | ZE | - | 9 | 0,49 |
| E1 | 511 | 919 | 49 | 13 | Austenit | ZE | - | 89 | 0,4 |
| E2 | 527 | 934 | 48 | 13 | Austenit | ZE | - | 52 | 0,42 |
| E3 | 610 | 942 | 44 | 13 | Austenit | ZE | - | 68 | 0,41 |
| E4 | 525 | 928 | 48 | 13 | Austenit | ZN | 10 % Ni | 95 | 0,36 |
| E5 | 538 | 944 | 48 | 13 | Austenit | ZN | 10 % Ni | 62 | 0,36 |
| E6 | 518 | 905 | 46 | 13 | Austenit | ZMO | 10 % Mo | 55 | 0,38 |

## Patentansprüche

1. Stahlflachprodukt, das für eine Kaltverformung vorgesehen ist,
- wobei das Stahlflachprodukt mit einer Zn-Beschichtung beschichtet ist, deren Basis Zink ist und die neben den durch Herstellungsprozess in die Zn-Beschichtung gelangenden Bestandteilen zusätzlich jeweils 5 - 20 Gew.-% Ni oder Mo enthält,
- wobei das Stahlsubstrat des Stahlflachprodukts aus einem Stahl besteht,
- der als Pflichtbestandteile (in Gew.-%)
| | |
|---|---|
| C: | 0,1 - 1,0 %, |
| Mn: | 10 - 30 %, |
| Al: | 0,3 - 2,5 %, |
und als Rest Eisen und unvermeidbare Verunreinigungen enthält und
- der als Wahlbestandteil zusätzlich eines oder mehrere der nachfolgend genannten Elemente mit der Maßgabe
Ni: 0,1 - 2 %,
Mo: 0,1 - 2%,
Si: bis zu 3 %,
Cr, Cu: jeweils bis zu 5 %,
P: bis zu 0,1 %,
S: bis zu 0,03 %,
Ti, Nb, V, Zr, Co: jeweils bis zu 0,5 %,
W: bis zu 0,5 %,
Sn, Sb, As: in Summe bis zu 0,5 %,
Ca: bis zu 0,015 %,
B: bis zu 0,1 %,
SEM: bis zu 1 %,
N: bis zu 0,1 %,
enthalten kann,
und
- wobei die Zusammensetzungen der Zn-Beschichtung und des Stahlsubstrats so aufeinander abgestimmt sind, dass der Betrag der mittleren Potenzialdifferenz zwischen der Zn-Beschichtung und dem Stahlsubstrat maximal 0,44 V beträgt.

2. Stahlflachprodukt nach Anspruch 1, **dadurch gekennzeichnet, dass** die Zn-Beschichtung elektrolytisch auf dem Stahlsubstrat abgeschieden ist.

3. Stahlflachprodukt nach Anspruch 2, **dadurch gekennzeichnet, dass** die Zn-Beschichtung 3 - 20 µm dick ist.

4. Stahlflachprodukt nach einem der voranstehenden Ansprüche, **dadurch gekennzeichnet, dass** die Zusammensetzung der Zn-Beschichtung und des Stahlsubstrats so aufeinander abgestimmt sind, dass der Betrag der mittleren Potenzialdifferenz zwischen der Zn-Beschichtung und dem Stahlsubstrat 0,2 - 0,42 V beträgt.

5. Stahlflachprodukt nach einem der voranstehenden Ansprüche, **dadurch gekennzeichnet, dass** der Al-Gehalt des Stahlsubstrats mindestens 0,7 Gew.-% beträgt.

6. Stahlflachprodukt nach einem der voranstehenden Ansprüche, **dadurch gekennzeichnet, dass** Ni oder Mo in Gehalten von 0,1 - 1 Gew.-% in seinem Stahlsubstrat als Pflichtbestandteil vorhanden ist.

7. Stahlflachprodukt nach Anspruch 5, **dadurch gekennzeichnet, dass** der Ni-Gehalt oder der Mo-Gehalt seines Stahlsubstrats 0,2 - 0,5 Gew.-% beträgt.

8. Stahlflachprodukt nach einem der voranstehenden Ansprüche, **dadurch gekennzeichnet, dass** sein C-Gehalt 0,2 - 0,8 Gew.-% beträgt.

9. Stahlflachprodukt nach einem der voranstehenden Ansprüche, **dadurch gekennzeichnet, dass** sein Mn-Gehalt 15 - 25 Gew.-% beträgt.

10. Stahlbauteil, hergestellt durch Umformen eines gemäß einem der Ansprüche 1 bis 9 beschaffenen Stahlflachprodukts.

11. Stahlbauteil nach Anspruch 10, **dadurch gekennzeichnet, dass** das Stahlbauteil durch Kaltumformen hergestellt ist.

## Claims

1. Flat steel product intended for cold forming,
- where the flat steel product is coated with a Zn coating which is based on zinc and which, in addition to the constituents entering the Zn coating through the production process, further comprises 5-20 wt% each of Ni or Mo,
- where the steel substrate of the flat steel product consists of a steel
- which comprises as obligatory constituents (in wt%)
| | |
|---|---|
| C: | 0.1-1.0%, |
| Mn: | 10-30%, |
| Al: | 0.3-2.5%, |
with the balance being iron and unavoidable impurities, and
- which as an optional constituent may further comprise one or more of the elements stated below with the following stipulations:
| | |
|---|---|
| Ni: | 0.1-2%, |
| Mo: | 0.1-2%, |
| Si: | up to 3%, |
| Cr, | Cu: each up to 5%, |
| P: | up to 0.1%, |
| S: | up to 0.03%, |
| Ti, | Nb, V, Zr, Co: each up to 0.5%, |
| W: | up to 0.5%, |
| Sn, | Sb, As: in total up to 0.5%, |
| Ca: | up to 0.015%, |
| B: | up to 0.1%, |
| REM: | up to 1%, |
| N: | up to 0.1%, |
and
- where the compositions of the Zn coating and of the steel substrate are adapted to one another in such a way that the amount of the average potential difference between the Zn coating and the steel substrate is not more than 0.44 V.

2. Flat steel product according to Claim 1, **characterized in that** the Zn coating is deposited electrolytically on the steel substrate.

3. Flat steel product according to Claim 2, **characterized in that** the Zn coating is 3-20 µm thick.

4. Flat steel product according to any of the preceding claims, **characterized in that** the compositions of the Zn coating and of the steel substrate are adapted to one another in such a way that the amount of the average potential difference between the Zn coating and the steel substrate is 0.2-0.42 V.

5. Flat steel product according to any of the preceding claims, **characterized in that** the Al content of the steel substrate is at least 0.7 wt%.

6. Flat steel product according to any of the preceding claims, **characterized in that** in its steel substrate, Ni or Mo is present in amounts of 0.1-1 wt% as an obligatory constituent.

7. Flat steel product according to Claim 5, **characterized in that** the Ni content or the Mo content of its steel substrate is 0.2-0.5 wt%.

8. Flat steel product according to any of the preceding claims, **characterized in that** its C content is 0.2-0.8 wt%.

9. Flat steel product according to any of the preceding claims, **characterized in that** its Mn content is 15-25 wt%.

10. Steel component produced by forming a flat steel product according to any of Claims 1 to 9.

11. Steel component according to Claim 10, **characterized in that** the steel component is produced by cold forming.

## Revendications

1. Produit plat en acier, qui est prévu pour un façonnage à froid,
- le produit plat en acier étant revêtu avec un revêtement de Zn, qui est à base de zinc et qui contient, outre les constituants introduits dans le revêtement de Zn par le processus de fabrication, également 5 à 20 % en poids respectivement de Ni ou Mo,
- le substrat en acier du produit plat en acier étant constitué par un acier,
- qui contient en tant que constituants obligatoires (en % en poids) :
| | |
|---|---|
| C : | 0,1 à 1,0 %, |
| Mn : | 10 à 30 %, |
| Al : | 0,3 à 2,5 %, |
le reste étant du fer et des impuretés inévitables,
et
- qui peut également contenir en tant que constituant facultatif un ou plusieurs des éléments mentionnés ci-après, à condition que :
| | |
|---|---|
| Ni : | 0,1 à 2 %, |
| Mo : | 0,1 à 2 %, |
| Si : | jusqu'à 3 %, |
| Cr, Cu : | chacun jusqu'à 5 %, |
| P : | jusqu'à 0,1 %, |
| S : | jusqu'à 0,03 %, |
| Ti, Nb, V, Zr, Co : | chacun jusqu'à 0,5 %, |
| W : | jusqu'à 0,5 %, |
| Sn, Sb, As : | au total jusqu'à 0,5 %, |
| Ca : | jusqu'à 0,015 %, |
| B : | jusqu'à 0,1 %, |
| SEM : | jusqu'à 1 %, |
| N : | jusqu'à 0,1 %, |
et
- les compositions du revêtement de Zn et du substrat en acier étant accordées l'une à l'autre de telle sorte que le montant de la différence de potentiel moyenne entre le revêtement de Zn et le substrat en acier soit au plus de 0,44 V.

2. Produit plat en acier selon la revendication 1, **caractérisé en ce que** le revêtement de Zn est déposé électrolytiquement sur le substrat en acier.

3. Produit plat en acier selon la revendication 2, **caractérisé en ce que** le revêtement de Zn est d'une épaisseur de 3 à 20 µm.

4. Produit plat en acier selon l'une quelconque des revendications précédentes, **caractérisé en ce que** les compositions du revêtement de Zn et du substrat en acier sont accordées l'une à l'autre de telle sorte que le montant de la différence de potentiel moyenne entre le revêtement de Zn et le substrat en acier soit de 0,2 à 0,42 V.

5. Produit plat en acier selon l'une quelconque des revendications précédentes, **caractérisé en ce que** la teneur en Al du substrat en acier est d'au moins 0,7 % en poids.

6. Produit plat en acier selon l'une quelconque des revendications précédentes, **caractérisé en ce que** du Ni ou du Mo est présent en teneurs de 0,1 à 1 % en poids dans son substrat en acier en tant que constituant obligatoire.

7. Produit plat en acier selon la revendication 5, **caractérisé en ce que** la teneur en Ni ou la teneur en Mo de son substrat en acier est de 0,2 à 0,5 % en poids.

8. Produit plat en acier selon l'une quelconque des revendications précédentes, **caractérisé en ce que** sa teneur en C est de 0,2 à 0,8 % en poids.

9. Produit plat en acier selon l'une quelconque des revendications précédentes, **caractérisé en ce que** sa teneur en Mn est de 15 à 25 % en poids.

10. Composant en acier, fabriqué par façonnage d'un produit plat en acier selon l'une quelconque des revendications 1 à 9.

11. Composant en acier selon la revendication 10, **caractérisé en ce que** le composant en acier est fabriqué par façonnage à froid.
